Europäisches Patentamt

European Patent Office

Office européen des brevets

(19)

(11) Veröffentlichungsnummer: **0 187 905**
**B1**

(12) **EUROPÄISCHE PATENTSCHRIFT**

(45) Veröffentlichungstag der Patentschrift: 04.07.90

(21) Anmeldenummer: 85113654.9

(22) Anmeldetag: 26.10.85

(51) Int. Cl.⁵: **C 08 F 257/02,** C 08 F 285/00,
C 08 F 2/22 // (C08F257/02,
212:08, 236:08, 236:06)

(54) **Styrol/Butadien-Pfropfcopolymerisat-Latex und diesen als Verstärkerlatex enthaltende, in der Wärme vulkanisierbare Masse zur Herstellung von Latexschaum.**

(30) Priorität: 28.12.84 DE 3447585

(43) Veröffentlichungstag der Anmeldung:
23.07.86 Patentblatt 86/30

(45) Bekanntmachung des Hinweises auf die
Patenterteilung:
04.07.90 Patentblatt 90/27

(84) Benannte Vertragsstaaten:
AT BE DE FR GB IT NL SE

(56) Entgegenhaltungen:
DE-A-1 056 364
FR-A-2 254 588
FR-A-2 341 604
US-A-4 307 134
US-A-4 333 969

(73) Patentinhaber: HÜLS AKTIENGESELLSCHAFT
Patentabteilung / PB 15 - Postfach 13 20
D-4370 Marl 1 (DE)

(72) Erfinder: Schlüter, Herbert, Dr.
Hessische Strasse 4
D-4370 Marl (DE)
Erfinder: Knipp, Herbert
Stockwieser Kamp 20
D-4358 Haltern (DE)
Erfinder: Wieland, Alfred, Dr.
Uckermarkstrasse 14
D-4370 Marl (DE)

Die Akte enthält technische Angaben, die nach dem Eingang der Anmeldung eingereicht wurden und die nicht in dieser Patentschrift enthalten sind.

EP 0 187 905 B1

**Beschreibung**

Nach dem Stand der Technik wird Latexschaum in der Regel wie folgt hergestellt:

Aus einem Kautschuklatex und einem Verstärkerlatex, d. h. dem Latex eines verstärkenden Polymerisates, wird durch Mischen der Latices ein verstärkter Kautschuklatex, die verstärkte Kautschukkomponente, erhalten. Aus dieser sowie einer wirksamen Menge eines Vulkanisationsmittels und üblichen Zusatzstoffen wird eine in der Wärme vulkanisierbare Masse erhalten. Diese wird mit Luft oder einem anderen Gas aufgeschäumt, mit einem Gelierungsmittel, wie beispielsweise Natriumsilikofluorid, versetzt, geliert und dann in der Wärme vulkanisiert (DE—PS 10 56 364, DE—OS 14 70 810). Die Gelierung erfolgt bei Raumtemperatur, im Infrarotfeld oder in der Aufheizphase zur Vulkanisation. Beim Non-Gel-Verfahren entfallen besondere Maßnahmen zur Gelierung. Der so hergestellte Latexschaum weist eine zellenartige Struktur auf.

Latexschaum soll ein gutes Eigenschaftsbild aufweisen, das durch die folgende Eigenschaftskombination beschrieben werden kann:

a) hohe Elastizität im Temperaturbereich von 20 bis 70°C, d. h. in diesem Temperaturbereich soll nach längerem Zusammendrücken der Druckverformungsrest (compression set) möglichst niedrig sein (DIN 53 572);

b) hohe Zugfestigkeit und hohe Dehnung beim Bruch (DIN 53 571);

c) bei vorgegebener Eindruckhärte soll das Raumgewicht möglichst gering sein (DIN 53 576), Wirtschaftlichkeit); man kann auch sagen: Bei vorgegebenem Raumgewicht soll die Eindruckhärte (Stauchhärte) möglichst hoch sein.

Die beschriebene Eigenschaftskombination wird vom Stand der Technik nur unvollkommen verwirklicht.

In der DE—PS 24 55 726 wird ein Styrol/Butadien-Pfropfcopolymerisat zur Verstärkung eines synthetischen Kautschuks vorgeschlagen. Dazu wird das Styrol/Butadien-Pfropfcopolymerisat mit dem synthetischen Kautschuk gemischt. Die so erhaltenen Gemische eignen sich zur Herstellung von Schuhsohlen sowie elektrischen Isolationsmaterialien. Im Gegensatz zum oben geschilderten Stand der Technik werden also keine Latices gemischt. Das Styrol/Butadien-Pfropfcopolmerisat wird durch Emulsionspolymerisation nach einem zweistufigen Batch-Verfahren erhalten.

Die Aufgabe der Erfindung ist es, einen Verstarkerlatex bereitzustellen, mit welchem die beschriebene Eigenschaftskombination besser als nach dem Stand der Technik verwirklicht werden kann.

Die Aufgabe wurde in überraschender Weise wie in den Patentansprüchen angegeben gelöst.

Gegenstand der Erfindung ist ein als Verstärkerlatex bei der Herstellung von Latexschaum geeigneter Styrol/Butadien-Pfropfcopolymerisatlatex, der durch Struktur- und Verfahrensparameter wie folgt charakterisiert wird:

a) er ist durch Emulsionspolymerisation nach einem grundsätzlich bekannten, semikontinuierlichen Emulsionszulaufverfahren in Gegenwart von 1 bis 6, insbesondere 3 bis 5, Massen-% einer üblichen Fettseife und/oder Harzseife als Emulgator und $\leq 0,3$, insbesondere $\leq 0,2$, Massen-% einer üblichen, das Molekulargewicht des Polymerisates regelnden Verbindung, jeweils bezogen auf die gesamten Monomeren, erhalten;

b) das Pfropfcopolymerisat besteht aus 35 bis 65 Massen-% der Pfropfunterlage (A), welche ihrerseits aus Pfropfunterlage (A1) und aufgepfropftem Anteil (A2) besteht, und 35 bis 65 Massen-% des in der letzten Stufe aufgepfropften Anteils (B);

c) die Pfropfunterlage (A) ist in zwei Polymerisationsstufen erhalten; in der ersten Stufe ist ein Polystyrolkeimlatex erhalten, dessen Feststoff (A1) 1 bis 20, insbesondere 5 bis 15, Massen-%, bezogen auf das Pfropfcopolymerisat, beträgt; der in der zweiten Stufe aufgepfropfte Anteil (A2) der Pfropfunterlage (A) besteht aus 86 bis 95 Massen-% wiederkehrenden Einheiten, welche durch Polymerisation von Styrol, und 5 bis 14 Massen-% wiederkehrenden Einheiten, welche durch Polymerisation von 1,3-Butadien erhalten sind; beim Zulauf des Emulgators während der Pfropfung wird intensiv gerührt, um die Bildung neuer Teilchen zu vermeiden;

d) der in der letzten Stufe aufgepfropfte Anteil (B) des Pfropfcopolymerisates besteht aus 62 bis 70 Massen-% wiederkehrenden Einheiten, welche durch Polymerisation von Styrol, und 30 bis 38 Massen-% wiederkehrenden Einheiten, welche durch Polymerisation von 1,3-Butadien erhalten sind; beim Zulauf des Emulgators während der Pfropfung wird intensiv gerührt, um die Bildung neuer Teilchen zu vermeiden;

e) die Parameter bei der Herstellung des Pfropfcopolymerisatlatex werden in grundsätzlich bekannter Weise so ausgewählt, daß die Latexteilchen einen durch Oberflächentitration (Seifentitration) bestimmten mittleren Durchmesser im Bereich von 120 bis 300 nm aufweisen.

Das semikontinuierliche Emulsionszulaufverfahren zur Herstellung des Styrol/Butadien-Pfropfcopolymerisatlatex ist grundsätzlich bekannt (siehe beispielsweise US—PS 4 134 872).

Die Styrol/Butadien-Pfropfcopolymerisatteilchen des Verstärkerlatex der Erfindung weisen infolge der Merkmale b) bis d) vergleichsweise harte und weiche Bereiche mit vergleichsweise hoher bzw. niedriger Glasübergangstemperatur (Tg) auf. Die Teilchen können in vereinfachender Weise wie folgt beschrieben werden:

Sie bestehen aus einem vergleichsweise harten Kern (Pfropfunterlage) und einer vergleichsweise weichen Schale mit vergleichsweise hohem bzw. niedrigem Tg.

2

Die Oberflächentitration zur Bestimmung des mittleren Durchmessers der Styrol/Butadien-Pfropfcopolymerisatteilchen erfolgt wie in J. Paint Techn. *47* (1975) 41, rechte Spalte, letzter Absatz ff., beschrieben.

Der Styrol/Butadien-Pfropfcopolymerisatlatex der Erfindung wird im allgemeinen als Verstärkerlatex zur Herstellung der verstärkten Kautschukkomponente verwendet. Diese weist im allgemeinen die folgenden Merkmale auf:

1. sie wird durch die folgenden Maßnahmen erhalten:
1.1 ein Kautschuklatex wird mit einem Verstärkerlatex (Latex eines verstärkenden Polymerisates; Festtoffe: 2 bis 30, insbesondere 5 bis 25, Massenteile phr) gemischt;
1.2 das Gemisch der Latices wird bis zu einem Feststoffgehalt von $\geq$ 55, insbesondere $\geq$ 60, Massen-% eingeengt;
2. der Kautschuklatex ist ein NR-Latex oder ein SBR-Latex, der Maßnahmen unterworfen wurde, welche die Agglomeration der Kautschukteilchen bewirken, oder ein Gemisch aus einem NR-Latex und einem SBR-Latex, der Maßnahmen unterworfen wurde, welche die Agglomeration der Kautschukteilchen bewirken;
3. der SBR-Latex ist nicht carboxyliert; er ist durch Emulsionspolymerisation in Gegenwart einer üblichen Fettseife und/oder Harzseife als Emulgator erhalten; der SBR enthält 15 bis 35, insbesondere 20 bis 30, Massen-% wiederkehrende Einheiten, welche durch polymerisation von Styrol erhalten sind;
4. die verstärkte Kautschukkomponente weist bei einem Feststoffgehalt von 68 Massen-% eine Viskosität von $\geq$ 2 500, insbesondere $\geq$ 2 000, mpa s, bestimmt im Brookfield-Viskosimeter (Spindel III, 30 Umdrehungen/min, 20°C) auf.

Die Maßnahmen zur Agglomeration der Kautschukteilchen des SBR-Latex sind bekannt (siehe beispielsweise DE-PSS 12 13 984 und 26 45 082).

Unter Vulkanisationsmitteln zur Herstellung der in der Wärme vulkanisierbaren Masse werden die bekannten Vulkanisationssysteme verstanden. Ein bevorzugtes Vulkanisationssystem enthält Schwefel in Kombination mit den üblichen Beschleunigern. Die Menge des Vulkanisationsmittels richtet sich nach den übrigen Mischungskomponenten und kann durch einfache, orientierende Versuche leicht ermittelt werden.

Übliche Zusatzstoffe zur Herstellung der in der Wärme vulkanisierbaren Masse sind beispielsweise Fettseifen und Harzseifen (sie können bereits in der verstärkten Kautschukkomponente in einer Menge vorliegen, die für die Weiterverarbeitung der vulkanisierbaren Masse ausreicht), Alterungs- und Lichtschutzmittel, Verdickungsmittel, wie beispielweise Carboxymethylcellulose, und Füllstoffe, wie beispielsweise Kreide, Kaolin und Stärke.

Die Erfindung wird durch die folgenden Beispiele erläutert. Darin bedeuten Teile Massenteile und Prozent (%) Massenprozent.

Die nicht erfindungsgemäßen Vergleichsbeispiele werden mit großen Buchstaben bezeichnet.

Die mittleren Teilchendurchmesser der im folgenden beschriebenen Latices wurden wie oben angegeben bestimmt.

Die Viskositäten der verstärkten Kautschukkomponenten wurden im Brookfield-Viskosimeter (Spindel III, 30 Umdrehungen/min, 20°C) bestimmt.

Herstellung der Verstärkerlatices 1 und A bis C

Beispiel 1
(Styrol/Butadien-Pfropfcopolymerisatlatex der Erfindung)

In einem Polymerisationsreaktor wurde eine Emulsion aus 84 Teilen vollentsalztem Wasser, 0,2 Teilen Kaliumoleat (Feststoff, vorliegend als 17%ige wäßrige Lösung) 0,1 Teilen Kaliumcarbonat, 0015 Teilen des Tetranatriumsalzes der Ethylendiamintetraessigsäure, 10 Teilen Styrol und 0,15 Teilen Ammoniumperoxodisulfat während 1 bis 2 Stunden auf 70°C erhitzt. Dabei wurde ein Polystyrolkeimlatex mit einem mittleren Teilchendurchmesser von 40 nm erhalten.

Zu dieser Vorlage wurden bei 75°C folgende Ströme gegeben:

1 Gemisch aus 19 Teilen vollentsalztem Wasser und 4 Teilen Kaliumoleat (Feststoff, vorliegend als 17%ige, wäßrige Lösung); Zugabezeit: 5 Stunden (konstante Strömungsgeschwindigkeit);
2 Lösung von 1,35 Teilen Ammoniumperoxodisulfat in 6 Teilen vollentsalztem Wasser; Zugabezeit: 6 Stunden (konstante Strömungsgeschwindigkeit);
3 Gemisch aus 45 Teilen Styrol/1,3-Butadien (Massenverhältnis: 89/11) und 0,06 Teilen tert.-Dodecylmercaptan; Zugabezeit: 2,5 Stunden (konstante Strömungsgeschwindigkeit);
4 Gemisch aus 45 Teilen Styrol/1,3-Butadien (Massenverhältnis: 67/33) und 0,09 Teilen tert.-Dodecylmercaptan; Zugabezeit. 2,5 Stunden (konstante Strömungsgeschwindigkeit).

Mit der Zugabe der Ströme 1 bis 3 wurde gleichzeitig begonnen. Nach 2,5 Stunden (Ende der ersten Pfropfstufe) wurde mit dem Strom 4 begonnen.

Der nach Beendigung der zweiten Pfropfstufe erhaltene Styrol/Butadien-Pfropfcopolymerisatlatex

EP 0 187 905 B1

hatte einen Feststoffgehalt von ca. 50% und einen mittleren Teilchendurchmesser von 220 nm.

Beispiel A
(Styrol/Butadien-Pfropfcopolymerisatlatex)

Das Beispiel entspricht dem Beispiel 1 im Massenverhältnis der insgesamt eingesetzten Monomeren (Styrol/1,3-Butadien = 80/20) und in den übrigen Herstellungsparametern; jedoch wurden die Ströme 3 und 4 durch den folgenden Strom ersetzt:

3 Gemisch aus 90 Teilen Styrol/1,3-Butadien (Massenverhältnis: 70/20) und 0,15 Teilen tert.-Dodecylmercaptan; Zugabezeit: 5 Stunden (konstante Strömungsgeschwindigkeit).

Mit der Zugabe der Ströme 1 bis 3 wurde gleichzeitig begonnen.

Der nach Beendigung der Pfropfstufe erhaltene Styrol/Butadien-Pfropfcopolymerisatlatex hatte einen Feststoffgehalt von ca 50% und einen mittleren Teilchendurchmesser von 200 nm.

Beispiel B
(Styrol/Butadien-Pfropfcopolymerisatlatex)

Das Beispiel entspricht dem Beispiel 1. jedoch wurde der Strom 4, durch den folgenden Strom ersetzt:

4 Gemisch aus 45 Teilen Styrol/l,3-Butadien (Massenverhältnis: 72/28) und 0,09 Teilen tert.-Dodecylmercaptan; Zugabezeit: 2,5 Stunden (konstante Strömungsgeschwindigkeit).

Der nach Beendigung der zweiten Pfropfstufe erhaltene Styrol/Butadien-Pfropfcopolymerisatlatex hatte einen Feststoffgehalt von ca. 50% und einen mittleren Teilchendurchmesser von 210 nm.

Beispiel C
(Polystyrollatex)

Das Beispiel entspricht dem Beispiel 1; jedoch wurden die Ströme 3 und 4 durch den folgenden Strom ersetzt:

3 Gemisch aus 90 Teilen Styrol und 0,15 Teilen tert.-Dodecylmercaptan; Zugabezeit: 5 Stunden (konstante Strömungsgeschwindigkeit).

Mit der Zugabe der Ströme 1 bis 3 wurde gleichzeitig begonnen.

Der nach Beendigung der Polymerisation erhaltene Polystyrollatex hatte einen Feststoffgehalt von ca. 50% und einen mittleren Teilchendurchmesser von 200 nm.

Herstellung des SBR-Latex

Der Latex wurde in bekannter Weise durch Redoxpolymerisation nach folgender Rezeptur hergestellt:

120 Teile vollentsalztes Wasser
2,7 Teile Kaliumoleat (als 100%ig berechnet)
0,5 Teile eines Kondensationsproduktes aus Formaldehyd und Naphthalinsulfonsäure
0,29 Teile Kaliumchlorid
31 Teile Styrol
69 Teile 1,3-Butadien

Nach 65% Umsatz der Monomeren wurde die Polymerisation abgebrochen. Der erhaltene SBR-Latex wurde den in der DE—PS 12 13 984 angegebenen Maßnahmen zur Agglomeration der Kautschukteilchen unterworfenDer mittlere Teilchendurchmesser betrug dann 240 nm. Die Restmonomeren wurden auf bekannte Weise abgetrennt. Das Polymerisat enthielt 26% wiederkehrende Einheiten, welche durch Polymerisation von Styrol erhalten sind (IR-Analyse).

Herstellung der verstärkten Kautschukkomponenten 1 und A bis C

Der SBR-Latex wurde jeweils mit einem der Verstärkerlatices 1 und A bis C gemischt (Feststoffe: 20 Teile phr). Das erhaltene Gemisch der Latices wurde jeweils bis zu einem Feststoffgehalt von 70% eingeengt.

Bei einem Feststoffgehalt von 68% wiesen die verstärkten Kautschukkomponenten folgende Viskositäten auf:

1: 1 400 mPa s
A: 1 200 mPa s
B: 1 300 mPa s
C: 1 350 mPa s

4

**EP 0 187 905 B1**

Herstellung der vulkanisierbaren Massen 1 und A bis C und der Latex schäume (Probekörper) 1 und A bis C
Die vulkanisierbaren Massen wurden nach folgender Rezeptur hergestellt (Feststoffe):

100 Teile einer der verstärkten Kautschukkomponenten 1 und A bis C
0,5 Teile Kaliumpleat (Zugabe als 17%ige, wäßrige Lösung)
0,25 Teile Carboxymethylcellulose (Zugabe als 2,5%ige, wäßrige Lösung)

Vor dem Aufschäumen wurden die vulkanisierbaren Massen durch Zugabe einer 50%igen, wäßrigen Dispersion des folgenden Vulkanisationssystems fertiggestellt (Feststoffe):

2 Teile Schwefel
1 Teil Zinkdiethyldithiocarbamat
1 Teil Zink-2-mercaptobenzothiazol
1 Teil Diphenylguanidin
3 Teile Zinkoxid
0,5 Teile Kaliumoleat (Zugabe als 17%ige, wäßrige Lösung)
1 Teil Antioxidans

In die vulkanisierbaren Massen wurde mit einer Schaumschlagmaschine Luft eingeschlagen. Die erhaltenen Naßschäume (Raumgewicht: ca. 130 g/l) wurden jeweils mit 2 Teilen Natriumsilikofluorid, vorliegend als 25%ige, wäßrige Lösung, versetzt und in beheizbare Formen gegossen. Durch Gelierung in der Aufheizphase und anschließende Vulkanisation bei 100°C/30 min wurden die Latexschäume 1 und A bis C erhalten. Sie wurden mit Wasser gewaschen, bei 75°C/16 h getrocknet (Raumgewicht: 100 g/l) und wie in der folgenden Tabelle angegeben charakterisiert.

## Tabelle

## Charakterisierung der Latexschäume (Probekörper) 1 und A bis C

| | Druckverformungsrest, Maximalwert in % im Temperaturbereich von 20 bis 70 °C (DIN 53 572)* | Zugfestigkeit [N/mm$^2$] (DIN 53 571) | Dehnung beim Bruch [%] (DIN 53 571) | Stauch- härte C** [N] (DIN 53 576) |
|---|---|---|---|---|
| 1 | 5,4 | 0,15 | 200 | 305 |
| A | 11,0 | 0,15 | 200 | 305 |
| B | 10,7 | 0,16 | 200 | 320 |
| C | 6,0 | 0,10 | 155 | 320 |

\* nach einer Lagerung von 22 Stunden im zusammengedrückten Zustand

\*\* Eindruckhärte bei gleichem Raumgewicht der Latexschäume

Die Probekörper A, B und C weisen unbefriedigend hohe Werte für den Druckverformungsrest auf. Der Probekörper C weist unbefriedigend niedrige Werte für die Zugfestigkeit und die Dehnung beim Bruch auf.

**Patentansprüche**

1. Styrol/Butadien-Pfropfcopolymerisatlatex, erhalten durch Emulsionspolymerisation in Gegenwart von 1 bis 6 Massen-% einer üblichen Fettseife und/oder Harzseife als Emulgator und ≥ 0,3 Massen-% einer üblichen, das Molekulargewicht des Polymerisates regelnden Verbindung, jeweils bezogen auf die gesamten Monomeren, und gekennzeichnet durch die folgenden Merkmale:
a) die Emulsionspolymerisation wird nach einem semikontinuierlichen Emulsionszulaufverfahren durchgeführt;

5

b) das Pfropfcopolymerisat besteht aus 35 bis 65 Massen-% der Pfropfunterlage (A), welche ihrerseits aus Pfropfunterlage (A1) und aufgepfropftem Anteil (A2) besteht, und 35 bis 65 Massen-% des in der letzten Stufe aufgepfropften Anteils (B);

c) die Pfropfunterlage (A) ist in zwei Polymerisationsstufen erhalten; in der ersten Stufe ist ein Polystyrolkeimlatex erhalten, dessen Feststoff (A1) 1 bis 20 Massen-%, bezogen auf das Pfropfcopolymerisat, beträgt; der in der zweiten Stufe aufgepfropfte Anteil (A2) der Pfropfunterlage (A) besteht aus 86 bis 95 Massen-% wiederkehrenden Einheiten, welche durch Polymerisation von Styrol, und 5 bis 14 Massen-% wiederkehrenden Einheiten, welche durch Polymerisation von 1,3-Butadien erhalten sind; beim Zulauf des Emulgators während der Pfropfung wird intensiv gerührt, um die Bildung neuer Teilchen zu vermeiden;

d) der in der letzten Stufe aufgepfropfte Anteil (B) des Pfropfcopolymerisates besteht aus 62 bis 70 Massen-% wiederkehrenden Einheiten, welche durch Polymerisation von Styrol, und 30 bis 38 Massen-% wiederkehrenden Einheiten, welche durch Polymerisation von 1,3-Butadien erhalten sind; beim Zulauf des Emulgators während der Pfropfung wird intensiv gerührt, um die Bildung neuer Teilchen zu vermeiden;

e) die Parameter bei der Herstellung des Pfropfcopolymerisatlatex werden so ausgewählt, daß die Latexteilchen einen durch Oberflächentitration bestimmten mittleren Durchmesser von 120 bis 300 nm aufweisen.

2. Styrol/Butadien-Pfropfcopolymerisatlatex nach Anspruch 1, gekennzeichnet durch das folgende Merkmal:

f) das Pfropfcopolymerisat besteht aus 45 bis 60 Massen-% der Pfropfunterlage (A) und 40 bis 55 Massen-% des in der letzten Stufe aufgepfropften Anteils (B).

3. Styrol/Butadien-Pfropfcopolymerisatlatex nach Anspruch 1 oder 2, gekennzeichnet durch die folgenden Merkmale:

g) der aufgepfropfte Anteil (A2) der Pfropfunterlage (A) besteht aus 87 bis 93 Massen-% wiederkehrenden Einheiten, welche durch Polymerisation von Styrol, und 7 bis 13 Massen-% wiederkehrenden Einheiten, welche durch Polymerisation von 1,3-Butadien erhalten sind;

h) der in der letzten Stufe aufgepfropfte Anteil (B) des Pfropfcopolymerisates besteht aus 65 bis 69 Massen-% wiederkehrenden Einheiten, welche durch Polymerisation von Styrol, und 31 bis 35 Massen-% wiederkehrenden Einheiten, welche durch Polymerisation von 1,3-Butadien erhalten sind.

4. Styrol/Butadien-Pfropfcopolymerisatlatex nach einem der Ansprüche 1 bis 3, gekennzeichnet durch das folgende Merkmal:

i) die Latexteilchen weisen einen mittleren Durchmesser von 150 bis 250 nm auf.


## Revendications

1. Latex de copolymère greffé styrène/butadiène obtenu par polymérisation en émulsion, en présence de 1 à 6% en masse d'un savon animal usuel et/ou d'un savon de résine usuel, en tant qu'émulsifiant, et de ≤0,3% en masse d'un composé réglant la masse moléculaire du polymère, dans chaque cas par rapport à l'ensemble des monomères, et caractérisé par les caractéristiques suivantes:

a) la polymérisation en émulsion est effectuée selon un procédé d'introduction semi-continue d'émulsion;

b) le copolymère greffé est constitué de 35 à 65% en masse du support de greffe (A), qui pour sa part est constitué du support de greffe (A1) et d'un fragment greffé (A2), et de 35 à 65% en masse du fragment (B) greffé dans la dernière étape;

c) le support de greffe (A) est obtenu en deux étapes de polymérisation; dans la première étape, on obtient un latex d'ensemencement de polystyrène, dont la teneur en matière solide (A1) va de 1 à 20% en masse, par rapport au copolymère greffé; le fragment (A2) du support de greffe (A), greffé dans la seconde étape, est constitué de 86 à 95% en masse de motifs répétitifs qui sont obtenus par polymérisation du styrène, et de 5 à 14% en masse de motifs répétitifs qui sont obtenus par polymérisation du butadiène -1,3; on agite vigoureusement lors de l'introduction de l'émulsifiant pendant le greffage, afin d'éviter la formation de nouvelles particules;

d) le fragment (B), greffé dans la dernière étape, du copolymère greffé, est constitué de 62 à 70% en masse de motifs répétitifs qui sont obtenus par polymérisation du styrène et de 30 à 38% en masse de motifs répétitifs qui sont obtenus par polymérisation du butadiène-1,3; pendant le greffage, on agite vigoureusement lors de l'introduction de l'émulsifiant, afin d'éviter la formation de nouvelles particules;

e) lors de la préparation du latex de copolymère greffé, on choisit les paramètres de manière que les particules de latex pésentent un diamètre moyen, déterminé par titrage superficiel (titrage de savon), dans la plage de 120 à 300 nm.

2. Latex de copolymère greffé styrène/butadiène selon la revendication 1, caractérisé par la caractéristique suivante:

f) le copolymère greffé est constitué de 45 à 60% en masse du support de greffe (A) et de 40 à 55% en masse du fragment (B) greffé dans la dernière étape.

3. Latex de copolymère greffé styrène/butadiène selon la revendication 1 ou 2, caractérisé par les caractéristiques suivantes:

g) le fragment greffé (A2) du support de greffe (A) est constitué de 87 à 93% en masse de motifs répétitifs qui sont obtenus par polymérisation du styrène et de 7 à 13% en masse de motifs répétitifs qui sont obtenus par polymérisation du butadiène -1,3;

h) le fragment (B), greffé dans la dernière étape, du copolymère greffé est constitué de 65 à 69% en masse de motifs répétitifs qui sont obtenus par polymérisation du styrène, et de 31 à 35% en masse de motifs répétitifs qui sont obtenus par polymérisation du butadiène -1,3.

4. Latex de copolymère greffé styrène/butadiène selon l'une quelconque des revendications 1 à 3, caractérisé par les caractéristiques suivantes:

i) les particules de latex présentent un diamètre moyen de 150 à 250 nm.

## Claims

1. A styrene/butadiene graft copolymer latex obtained by emulsion polymerization in the presence of 1 to 6% by weight of a conventional fat soap and/or resin soap as emulsifier and $\geq$ 0.3% by weight of a conventional molecular weight regulator for the polymer, each percentage being based on the total monomers, and characterized by the following features:

a) the emulsion polymerization is carried out by a semi-continuous emulsion-feed process;

b) the graft copolymer is composed of 35 to 65% by weight of the graft base (A) which in turn is composed of the graft base (A1) and the grafted-on component (A1), and 35 to 65% by weight of component (B) grafted on in the final step;

c) the graft base (A) is obtained in two polymerization steps; in the first step, a polystyrene nucleating latex is obtained whose solid (A1) is 1 to 20% by weight, based on the graft copolymer; the component (A2) of the graft base (A), which is grafted on in the second step, is composed of 86 to 95% by weight of repeating units which are obtained by polymerization of styrene, and 5 to 14% by weight of repeating units which are obtained by polymerization of 1,3-butadiene; feeding of the emulsifier during grafting being accompanied by intensive stirring in order to avoid the formation of new particles;

d) the component (B) of the graft copolymer, which is grafted on in the final step, is composed of 62 to 70% by weight of repeating units which are obtained by polymerization of styrene, and 30 to 38% by weight of repeating units which are obtained by polymerization of 1,3-butadiene; feeding of the emulsifier during grafting being accompanied by intensive stirring in order to avoid the formation of new particles:

e) the parameters in the preparation of the graft copolymer latex are selected such that the latex particles have an average diameter, determined by surface titration, of 120 to 300 nm.

2. A styrene/butadiene graft copolymer latex according to claim 1, characterized by the following feature:

f) the graft copolymer is composed of 45 to 60% by weight of the graft base (A) and 40 to 55% by weight of the component (B) which is grafted on in the final step.

3. A styrene/butadiene graft copolymer latex according to claim 1 or 2, characterized by the following features:

g) the grafted-on component (A2) of the graft base (A) is composed of 87 to 93% by weight of repeating units which are obtained by polymerization of styrene, and 7 to 13% by weight of repeating units which are obtained by polymerization of 1,3-butadiene;

h) the component (B) of the graft copolymer, which is grafted on in the final step, is composed of 65 to 69% by weight of repeating units which are obtained by polymerization of styrene, and 31 to 35% by weight of repeating units which are obtained by polymerization of 1,3-butadiene.

4. A styrene/butadiene graft copolymer latex according to any one of claims 1 to 3, characterized by the following feature:

i) the latex particles have an average diameter of 150 to 250 nm.